# EUROPÄISCHE PATENTSCHRIFT

(11) **EP 3 710 808 B1**
(45) Veröffentlichungstag und Bekanntmachung des Hinweises auf die Patenterteilung: **05.10.2022**
(21) Anmeldenummer: 18807202.9
(22) Anmeldetag: 08.11.2018
(51) Int. Cl.: G01N 7/14, G01N 7/16

(54) **VERFAHREN ZUR DAMPFDRUCKMESSUNG VON FLÜSSIGEN UND FESTEN STOFFEN**
METHOD FOR MEASURING THE VAPOUR PRESSURE OF FLUIDS AND SOLIDS
MÉTHODE POUR LA DÉTERMINATION DE LA PRESSION DE VAPEUR DES FLUIDES ET DES SOLIDES

(30) Priorität: 14.11.2017 AT 4462017
(43) Veröffentlichungstag der Anmeldung: 23.09.2020
(73) Patentinhaber: Grabner Instruments Messtechnik GmbH, 1220 Wien (AT)
(72) Erfinder: LUTZ, Josef, 2471 Rohrau (AT)
(74) Vertreter: Keschmann, Marc
(86) Internationale Anmeldenummer: PCT/AT2018/000090
(87) Internationale Veröffentlichungsnummer: WO 2019/094994

(56) Entgegenhaltungen:
- EP-A1- 0 689 044
- DE-T2- 69 120 088

## Beschreibung

Die Erfindung betrifft ein Verfahren zur Dampfdruckmessung von flüssigen und festen Stoffen, bei dem eine Probe des Stoffes in einem veränderbaren Volumen einer Messzelle angeordnet wird, die Messzelle gasdicht verschlossen wird, das Volumen der Messzelle bis zur Erreichung eines Messvolumens vergrößert wird und wenigstens ein erster Wert des nach der Vergrößerung des Volumens herrschenden Gasdrucks gemessen wird.

Der Dampfdruck eines Stoffes wird im Wesentlichen durch seine Materialeigenschaften und die Temperatur bestimmt. Eine aus dem Stand der Technik bekannte Möglichkeit der Messung des Dampfdrucks von Flüssigkeiten und Festkörpern im Druckbereich von wenigen kPa bis zu sehr hohen Drücken ist die Verwendung einer Messzelle mit verschiebbarem Kolben.

Der bekannte Messvorgang umfasst die folgenden Schritte:
a) die Messzelle wird bei einer bestimmten Position des Kolbens vollständig mit dem Probenmaterial gefüllt, für welches der Dampfdruck gemessen werden soll;
b) danach wird die Messzelle vakuumdicht verschlossen;
c) der Kolben wird so bewegt, dass sich das Volumen vergrößert, wodurch ein zusätzliches evakuiertes Volumen entsteht;
d) die eingefüllte Probe gibt in das zusätzliche Volumen so viel Gasanteile ab, bis ein Gleichgewichtszustand zwischen der Gasphase einerseits und der flüssigen oder festen Phase andererseits entsteht;
e) der dabei entstandene Druck im Gasvolumen entspricht dem Dampfdruck des Materials.

Die Messergebnisse für den Dampfdruck der Probe können stark verfälscht werden, wenn in der Probe fremde Gase gelöst sind (z.B. Luft in Wasser). Die gelösten Gase tragen mit ihrem Partialdruck zum Gesamtdruck im Gasvolumen bei, wodurch ein größerer Dampfdruck vorgetäuscht wird.

Um trotz gelöster Gase den Dampfdruck der Flüssigkeit korrekt messen zu können, wurde die "Triple Point" Messmethode entwickelt (z.B. ASTM D6378, ASTM D6377). Diese gilt unter der Annahme, dass sich die gelösten Gase wie ideale Gase verhalten. Bei der "Triple Point" Messmethode wird die oben beschriebene Messung des Dampfdrucks bei drei verschiedenen Volumina der Gasphase wiederholt und es werden die drei Messwerte einer Auswertung dahingehend unterzogen, dass der darin jeweils enthaltene Partialdruck-Anteil der idealen Gase ermittelt und herausgerechnet wird.

Für korrekte Ergebnisse ist es weiters essentiell, dass sich die Proben- und die Gasphase zur Bestimmung des Gesamtdruckes im Gleichgewicht befinden. Dies kann jedoch eine lange Zeit in Anspruch nehmen. Während des Messvorganges ist folgender Druckverlauf zu beobachten. Mit der Bewegung des Kolbens und der dadurch bewirkten Volumenvergrößerung sinkt der Druck bis die Kolbenendposition erreicht wird. Danach steigt der Druck wegen des aus der Probe in das zusätzliche Volumen entweichenden Gases wieder an bis ein Gleichgewichtszustand erreicht wird. Dies erfolgt in der Anfangsphase meist als exponentieller Druckanstieg. Bei sehr langsam ausgasenden Proben folgt danach für eine sehr lange Zeit ein fast linearer Druckanstieg, dessen Steigung klein ist und dessen Steigung sehr langsam abnimmt. Der theoretische Gleichgewichtszustand ist erst dann erreicht, wenn der Druck konstant ist. Die automatische Erkennung eines konstanten Druckes wird über die Aufzeichnung des Druckverlaufs versucht, dies ist jedoch äußerst schwierig, weil die Druckänderungsraten über einen Bereich von mehreren Minuten oft unterhalb des Rauschens im Drucksignal liegen.

Erst bei Erreichen eines konstanten Drucks kann man sicher sein, dass a) der gesamte Probenraum die gleiche Temperatur hat und b) die Gasanteile im Gasvolumen im Gleichgewicht mit den in der Flüssigkeit gelösten Gasen stehen. Um dies zu gewährleisten, kann man entweder eine fixe Wartezeit (Ausgleichszeit) oder bei nicht bekannten Proben einen maximalen Anstieg des Druckes vorgeben.

DE 691 20 088 T2 offenbart eine Zylinder- und Kolbenvorrichtung zum Vornehmen von Messungen des Dampfdrucks flüssiger Zusammensetzungen.

Der wesentliche Nachteil der bisherigen Messmethode bei Proben, die sehr langsam ausgasen, zeigt sich an folgenden Beispielen:
a) Bei der Bestimmung des Dampfdruckes von langsam ausgasenden Proben, wie z.B. bei Wasser (die Ausgleichszeit kann über eine Stunde betragen), entstehen nicht nur sehr lange Messzeiten, sondern es treten auf Grund der endlichen Dichtheit der Messzelle auch Verfälschungen der erhaltenen Messwerte auf.
b) Bei der Bestimmung des Gesamtdruckes für kleine Gasvolumina über einer Flüssigkeit kann der maximale Druck durch zu geringe Ausgleichszeiten massiv unterschätzt werden. Dies stellt insbesondere bei petrochemischen Produkten ein großes Risiko dar, weil der zu erwartende Gesamtdruck einen wichtigen Parameter für die Sicherheit des Transports solcher Produkte darstellt.

Es ist daher eine Aufgabe der Erfindung, ein Verfahren zur Dampfdruckmessung von flüssigen und festen Stoffen bereitzustellen, mit welchem die oben genannten Nachteile überwunden oder vermindert werden können. Insbesondere soll ein Verfahren bereitgestellt werden, welches eine schnelle und zuverlässige Dampfdruckmessung auch von sehr langsam ausgasenden Proben ermöglicht.

Zur Lösung dieser Aufgabe sieht die Erfindung bei einem Verfahren der eingangs genannten Art vor, dass zusätzlich das Volumen der Messzelle bis zur Erreichung des Messvolumens verringert wird und wenigstens ein zweiter Wert des nach der Verringerung des Volumens herrschenden Gasdrucks gemessen wird und der Dampfdruck aus dem wenigstens einen ersten und dem wenigstens einen zweiten Messwert errechnet wird. Bei diesem Verfahren ist also neben der Messung zumindest eines ersten Druckmesswerts während des Ausgasens nach einer Dekompression auch die Messung zumindest eines zweiten Druckmesswerts nach einer Kompression des Gases vorgesehen. Wenn, wie dies bevorzugt vorgesehen ist, die Messung des ersten Druckwerts und die Messung des zweiten Druckwerts bei gleicher Temperatur erfolgt und die Dekompression sowie die Kompression auf dasselbe Volumen hin, nämlich auf das vorgegebene Messvolumen hin, erfolgen, muss sich bei beiden Vorgängen, nämlich bei der Dekompression und der Kompression, bei Erreichen eines Gleichgewichtszustandes derselbe Druck einstellen. Da Adsorption und Desorption des gasförmigen Stoffes in erster Näherung idente physikalische Vorgänge und daher symmetrisch sind, wird die Zeitkonstante für beide Vorgänge (inkl. des Temperaturausgleiches) für praktische Betrachtungen gleich sein.

Dadurch ist es möglich, unter Ausnützung der gleichen Zeitkonstanten den Messvorgang deutlich zu verkürzen, da mit Hilfe der beiden ermittelten Werte der Dampfdruck in einfacher Weise berechnet werden kann. Es ist nicht erforderlich, den vollständigen Druckausgleich im Volumen der Messzelle abzuwarten, wodurch eine bedeutende Zeitersparnis erzielt werden kann.

Die Ermittlung des wenigstens einen ersten Messwerts und des wenigstens einen zweiten Messwerts erfolgt somit bevorzugt vor dem Erreichen eines Gleichgewichtszustands zwischen der Gasphase und der flüssigen bzw. festen Phase. Besonders bevorzugt erfolgt die Ermittlung des wenigstens einen ersten Messwerts und des wenigstens einen zweiten Messwerts vor Ablauf der Hälfte der für das Erreichen des Gleichgewichtszustandes erforderlichen Zeit.

Die Ermittlung lediglich eines einzigen ersten Messwerts und eines einzigen zweiten Messwerts ist beispielsweise dann ausreichend, wenn der jeweilige Messwert nach Ablauf einer vordefinierten Zeit nach dem Erreichen des Messvolumens ermittelt wird. Unter der Annahme, dass die Adsorption und die Desorption des gasförmigen Stoffes in erster Näherung idente physikalische Vorgänge und daher symmetrisch sind, kann der gesuchte Dampfdruck als Mittelwert des ersten und des zweiten Messwerts errechnet werden.

Gemäß einer alternativen, bevorzugten Verfahrensweise ist jedoch vorgesehen, dass wenigstens zwei erste Messwerte und wenigstens zwei zweite Messwerte gemessen werden, dass aus den wenigstens zwei Messwerten jeweils eine den sinkenden bzw. steigenden Druckverlauf kennzeichnende Größe ermittelt wird und dass der Dampfdruck aus den kennzeichnenden Größen errechnet wird. Der Zeitabstand zwischen der Ermittlung der jeweils wenigstens zwei Messwerte wird hierbei bevorzugt in der Adsorptionsphase gleich gewählt wie in der Desorptionsphase, um in beiden Vorgängen miteinander vergleichbare Werte zu erhalten. Weiters wird der Zeitabstand zwischen dem Erreichen des Messvolumens und der Ermittlung der wenigstens zwei Messwerte bevorzugt in der Adsorptionsphase gleich gewählt wie in der Desorptionsphase.

Hinsichtlich der Errechnung des Dampfdrucks kann bevorzugt so vorgegangen werden, dass die den sinkenden bzw. steigenden Druckverlauf kennzeichnende Größe jeweils eine die lokale Steigung des Druckverlaufs wiedergebende Gerade in einem Zeit-Druck-Koordinatensystem ist und der Dampfdruck als Kreuzungspunkt der Geraden errechnet wird.

Im Rahmen des erfindungsgemäßen Verfahrens ist die Reihenfolge der Ermittlung des wenigstens einen ersten Messwerts und des wenigstens einen zweiten Messwerts unerheblich. Die Erfindung umfasst daher sowohl Ausführungen, bei denen zuerst nach einer Dekompression wenigstens ein erster Messwert und dann nach einer Kompression wenigstens ein zweiter Messwert ermittelt wird, als auch Ausführungen, bei denen zuerst nach einer Kompression wenigstens ein zweiter Messwert und dann nach einer Dekompression wenigstens ein erster Messwert ermittelt wird.

Um eine Kompression und danach eine Dekompression auf dasselbe Messvolumen oder um eine Dekompression und danach eine Kompression auf dasselbe Messvolumen vornehmen zu können, muss zwischen den beiden Schritten ein Zwischenschritt vorgesehen sein, welcher die Erhöhung oder Verringerung des Volumens über das Messvolumen hinaus bzw. unter das Messvolumen umfasst.

Eine mögliche Ausführungsform des Verfahrens sieht beispielsweise vor, dass nach der Ermittlung des ersten Messwerts und vor Ermittlung des zweiten Messwerts das Volumen der Messzelle auf ein Übergangsvolumen weiter erhöht wird. Das Verfahren sieht hierbei vor, dass das Volumen der Messzelle in einem ersten Schritt auf das Messvolumen erhöht wird und anschließend der wenigstens eine erste Wert des nach der Vergrößerung des Volumens herrschenden Gasdrucks gemessen wird, dass das Volumen in einem zweiten Schritt auf ein Übergangsvolumen weiter erhöht wird, dass das Volumen der Messzelle in einem dritten Schritt auf das Messvolumen verringert wird und anschließend der wenigstens eine zweiter Wert des nach der Verringerung des Volumens herrschenden Gasdrucks gemessen wird, und dass in einem vierten Schritt der Dampfdruck aus dem wenigstens einen ersten und dem wenigstens einen zweiten Messwert errechnet wird. Bevorzugt wird das Volumen im zweiten Schritt über einen Zeitraum gehalten, der nicht wesentlich kleiner als die Ausgleichszeiten für Schritt eins und drei ist. Bevorzugt sollte er gleich oder deutlich größer sein.

Alternativ kann vorgesehen sein, dass das Volumen der Messzelle ausgehend von einem über dem Messvolumen liegenden Niveau in einem ersten Schritt auf das Messvolumen reduziert wird und anschließend der wenigstens eine zweite Wert des nach der Verringerung des Volumens herrschenden Gasdrucks gemessen wird, dass das Volumen in einem zweiten Schritt auf ein Übergangsvolumen weiter reduziert wird, dass das Volumen der Messzelle in einem dritten Schritt auf das Messvolumen erhöht wird und anschließend der wenigstens eine erste Wert des nach der Vergrößerung des Volumens herrschenden Gasdrucks gemessen wird, und dass in einem vierten Schritt der Dampfdruck aus dem wenigstens einen ersten und dem wenigstens einen zweiten Messwert errechnet wird. Bevorzugt wird das Volumen im zweiten Schritt über einen Zeitraum gehalten, der nicht wesentlich kleiner als die Ausgleichszeiten für Schritt eins und drei ist. Bevorzugt sollte er gleich oder deutlich größer sein.

Das Volumen der Messzelle wird bevorzugt dadurch veränderbar gestaltet, dass das Volumen von einem beweglichen Kolben begrenzt wird. Eine bevorzugte Ausbildung sieht hierbei vor, dass das Volumen der Messzelle mit Hilfe eines Kolbens verändert wird. Dies stellt eine einfache, schnelle und präzise Möglichkeit zur Änderung des Volumens der Messzelle bereit.

Weiters ist bevorzugt vorgesehen, dass der wenigstens eine erste Wert und der wenigstens eine zweite Wert jeweils nach der gleichen Zeitdauer nach Abschluss der Volumenänderung ermittelt werden.

Das Vorsehen eines zeitlichen Abstands zwischen dem Abschluss der Volumenänderung und dem Messen der Werte hat den Vorteil, dass der Einfluss von Ausgleichsvorgängen, insbesondere Temperaturausgleichsvorgängen, reduziert bzw. ausgeschaltet werden kann.

Bevorzugt ist vorgesehen, dass die Probe in der Messzelle temperiert, insbesondere erhitzt wird. Dies ist insbesondere dann von Bedeutung, wenn der Dampfdruck einer Probe stark von der Temperatur abhängt bzw. wenn der Dampfdruck als Funktion der Temperatur ermittelt werden soll.

Wenn ein beweglicher Kolben vorgesehen ist, der ausgebildet ist, um das Volumen der Messzelle zu ändern, kann das Verfahren bevorzugt derart durchgeführt werden, dass die Probe mit Hilfe des Kolbens in die Messzelle gesaugt und die Probe nach Abschluss der Messung bevorzugt mit Hilfe des Kolbens aus der Messzelle gedrückt wird. Während des Befüllens der Messzelle mit der Probe vergrößert der Kolben das Volumen der Messzelle, sodass ein Unterdruck entsteht und das jeweilige Fluid aus einer Eingangsleitung in die Messzelle geführt wird. Nach Abschluss der Dampfdruckbestimmung wird der Kolben in die andere Richtung geführt, verkleinert das Volumen der Messzelle und drückt dadurch das Fluid aus der Messzelle hinaus.

Weiters ist bevorzugt vorgesehen, dass der wenigstens eine erste Messwert und der wenigstens eine zweite Messwert in der Messzelle mit Hilfe eines im Kolben integrierten Drucksensors gemessen werden.

In einer bevorzugten Ausführung ist vorgesehen, dass ein Messzyklus umfassend die Ermittlung des wenigstens einen ersten Messwerts und des wenigstens einen zweiten Messwerts zumindest einmal, bevorzugt zweimal wiederholt wird, wobei das Messvolumen jeweils unterschiedlich gewählt wird. Im Falle der zweimaligen Wiederholung - es werden somit drei Messzyklen vorgenommen - handelt es sich um die sog. "Triple Point"-Messmethode. Durch diese Vorgehensweise kann der Anteil der idealen Gase im Verhältnis zum Gesamtdruck ermittelt werden. Die Differenz zwischen Gesamtdruck und dem Partialdruck der idealen Gase ergibt den Dampfdruck der Probe. Das Verfahren vermeidet dadurch eine Verfälschung der Dampfdruckbestimmung durch in der Probe gelöste Gase, wie z.B. Luft in Wasser.

Der größte Vorteil dieses Verfahrens ergibt sich bei der Bestimmung des theoretischen Dampfdruckes für ein Gasvolumen von 0 (TVP - true vapor pressure). Dieser Wert wird international als kritischer Wert für Sicherheitsfragen bei Transporten etc. verwendet und kann, auf Grund der temperaturabhängigen Ausdehnung der Flüssigkeit, nur theoretisch über Extrapolation ermittelt werden. Zur genauen Bestimmung sind a) mehr als zwei Punkte und b) möglichst kleine Gasvolumina von Vorteil. Zusätzlich haben in vielen Fällen diese Proben (Erdöl etc.) sehr lange Zeitkonstanten für die Ausgasung.

Die Erfindung wird nachfolgend anhand eines in der Zeichnung schematisch dargestellten Ausführungsbeispiels näher erläutert. In dieser zeigen Fig. 1 eine schematische Darstellung eines Druck-Zeit-Diagramms während der Durchführung des erfindungsgemäßen Verfahrens, Fig. 2 eine schematische Darstellung einer ersten Berechnungsart des Dampfdruckes mit Hilfe des erfindungsgemäßen Verfahrens in einem Druck-Zeit-Diagramm, Fig. 3 eine schematische Darstellung einer zweiten Berechnungsart des Dampfdruckes mit Hilfe des erfindungsgemäßen Verfahrens in einem Druck-Zeit-Diagramm und Fig. 4 eine schematische Darstellung einer Messzelle zur Durchführung des erfindungsgemäßen Verfahrens.

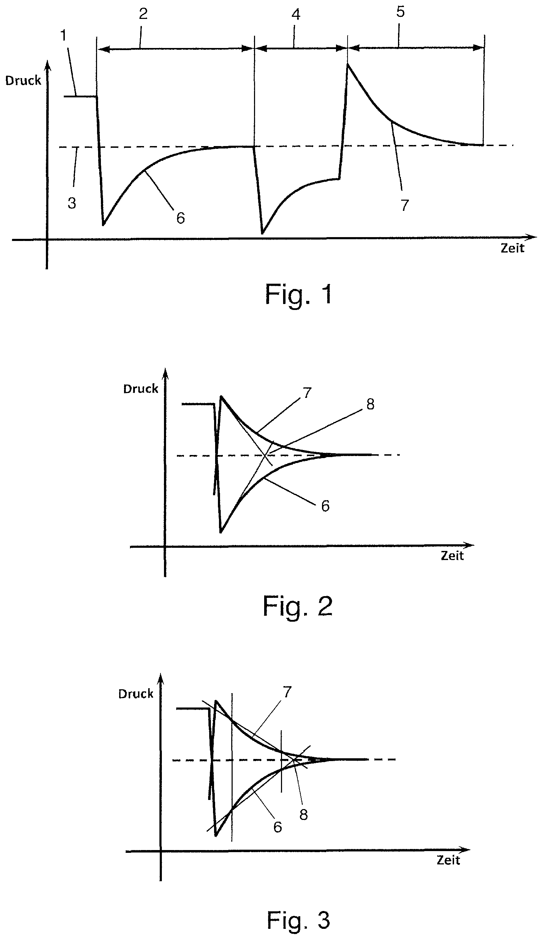

In Fig. 1 ist der Druckverlauf während eines erfindungsgemäßen Verfahrens in der Messzelle dargestellt. Nach dem Anordnen der Probe in der Messzelle herrscht in dem Volumen der Messzelle der Anfangsdruck 1. Im ersten Schritt 2 wird das Volumen der Messzelle auf ein Messvolumen erhöht. Der Druck in der Messzelle fällt zunächst ab und steigt anschließend auf Grund der aus der Probe entweichenden Gase wieder an, bis der Druck im Volumen der Messzelle den Gleichgewichtsdruck, der dem Dampfdruck 3 entspricht, erreicht hat. Der Druckverlauf folgt der Kurve 6. Während dieses Druckanstieges wird zumindest ein erster Wert des Gasdrucks gemessen. Sobald der zumindest eine erste Wert gemessen wurde, kann im zweiten Schritt 4 das Volumen der Messzelle auf ein Übergangsvolumen weiter erhöht werden. Hierbei fällt der Druck erneut zuerst ab und steigt danach wieder an - kann aber nie über den Dampfdruck 3 steigen. Anschließend wird in einem dritten Schritt 5 das Volumen in der Messzelle auf das Messvolumen reduziert. Der Druck steigt hierbei zuerst an und fällt anschließend auf Grund einer teilweisen Absorption des Gases in die Probe wieder ab, bis der Dampfdruck 3 erreicht wurde. Der Druckverlauf folgt der Kurve 7. Während des Druckabfalls wird zumindest ein zweiter Wert des Gasdrucks gemessen. Sobald der zumindest eine zweite Wert gemessen wurde, kann das Verfahren beendet werden. Es ist also nicht nötig jeweils den in Fig. 1 dargestellten vollständigen Druckausgleich, also das Erreichen des Dampfdrucks abzuwarten, bevor mit dem nächsten Schritt begonnen wird bzw. das Verfahren beendet wird. Nachdem zumindest ein erster und ein zweiter Wert gemessen wurden, kann mit diesen Werten der Dampfdruck, wie in Fig. 2 dargestellt, berechnet werden.

In Fig. 2 ist eine erste Art der erfindungsgemäßen Berechnung des Dampfdrucks dargestellt. Hierfür sind die Druckverläufe nach der Erhöhung des Volumens auf das Messvolumen (Kurve 6, erster Schritt 2) sowie nach der Reduzierung des Volumens auf das Messvolumen (Kurve 7, dritter Schritt 5) in einem Druck-Zeit-Diagramm übereinandergelegt. Es ist ersichtlich, dass die Kurven 6,7 im Wesentlichen symmetrisch sind, also dass der Dampfdruck nach der gleichen Zeitdauer mit dem gleichen, um den Dampfdruck gespiegelten Druckverlauf erreicht wird. Im Fall der in Fig. 2 dargestellten Berechnung wird zum selben Zeitpunkt nach Erreichen des Messvolumens jeweils die Steigung des Druckverlaufs ermittelt und der Kreuzungspunkt 8 der den jeweiligen lokalen Druckgradienten entsprechenden Geraden errechnet.

Bei der alternativen Verfahrensweise gemäß Fig. 3 werden zwei erste Druckwerte sowie zwei zweite Druckwerte nach jeweils gleichen Zeitabständen gemessen, sodass aus der in einem bestimmten Zeitintervall ermittelten Druckdifferenz jeweils eine Steigung in Form einer Geraden bestimmt wird. Anschließend wird der Schnittpunkt 8 der beiden Steigungen berechnet. Der Dampfdruck liegt im Schnittpunkt 8. Alternativ können beispielsweise auch jeweils nur ein erster und ein zweiter Wert der Kurven 6,7 in gleichem Zeitabstand von dem maximalen bzw. minimalen Druck gemessen werden, wobei anschließend der Mittelwert dieser gemessenen Punkte, der den Dampfdruck darstellt, berechnet wird.

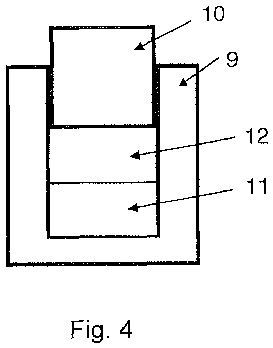

In Fig. 4 ist eine Messzelle 9 mit einem Kolben 10, der zusammen mit der Messzelle 9 ein Volumen begrenzt, dargestellt. Im unteren Bereich 11 des Volumens der Messzelle ist die Probe angeordnet und im oberen Bereich 12 ist eine Gasphase der Probe ausgebildet. Durch Variation der Stellung des Kolbens 10 kann das Volumen erhöht bzw. reduziert werden, sodass das erfindungsgemäße Verfahren durchgeführt werden kann.

## Patentansprüche

1. Verfahren zur Dampfdruckmessung von flüssigen und festen Stoffen, bei dem eine Probe des Stoffes in einem veränderbaren Volumen einer Messzelle (9) angeordnet wird, die Messzelle (9) gasdicht verschlossen wird, das Volumen der Messzelle (9) bis zur Erreichung eines Messvolumens vergrößert wird und wenigstens ein erster Wert des nach der Vergrößerung des Volumens herrschenden Gasdrucks gemessen wird, **dadurch gekennzeichnet, dass** zusätzlich das Volumen der Messzelle (9) bis zur Erreichung des Messvolumens verringert wird und wenigstens ein zweiter Wert des nach der Verringerung des Volumens herrschenden Gasdrucks gemessen wird und der Dampfdruck (3) aus dem wenigstens einen ersten und dem wenigstens einen zweiten Messwert errechnet wird.

2. Verfahren nach Anspruch 1, **dadurch gekennzeichnet, dass** wenigstens zwei erste Messwerte und wenigstens zwei zweite Messwerte gemessen werden, dass aus den wenigstens zwei Messwerten jeweils eine den sinkenden bzw. steigenden Druckverlauf (6,7) kennzeichnende Größe ermittelt wird und dass der Dampfdruck (3) aus den kennzeichnenden Größen errechnet wird.

3. Verfahren nach Anspruch 2, **dadurch gekennzeichnet, dass** die kennzeichnende Größe jeweils eine die lokale Steigung des Druckverlaufs (6,7) wiedergebende Gerade in einem Zeit-Druck-Koordinatensystem ist und der Dampfdruck (3) als Kreuzungspunkt (8) der Geraden errechnet wird.

4. Verfahren nach Anspruch 1, 2 oder 3, **dadurch gekennzeichnet, dass** nach der Ermittlung des ersten Messwerts und vor Ermittlung des zweiten Messwerts das Volumen der Messzelle (9) auf ein Übergangsvolumen weiter erhöht wird.

5. Verfahren nach Anspruch 1, 2 oder 3, **dadurch gekennzeichnet, dass** nach der Ermittlung des ersten Messwerts und vor Ermittlung des zweiten Messwerts das Volumen der Messzelle (9) auf ein Übergangsvolumen verringert wird.

6. Verfahren nach einem der Ansprüche 1 bis 5, **dadurch gekennzeichnet, dass** das Volumen der Messzelle (9) mit Hilfe eines Kolbens (10) verändert wird.

7. Verfahren nach einem der Ansprüche 1 bis 6, **dadurch gekennzeichnet, dass** der wenigstens eine erste Wert und der wenigstens eine zweite Wert jeweils nach der gleichen Zeitdauer nach Abschluss der Volumenänderung ermittelt werden.

8. Verfahren nach einem der Ansprüche 1 bis 7, **dadurch gekennzeichnet, dass** die Probe in der Messzelle (9) temperiert, insbesondere erhitzt wird.

9. Verfahren nach einem der Ansprüche 1 bis 8, **dadurch gekennzeichnet, dass** die Probe mit Hilfe des Kolbens (10) in die Messzelle (9) gesaugt und die Probe nach Abschluss der Messung bevorzugt mit Hilfe des Kolbens (10) aus der Messzelle (9) gedrückt wird.

10. Verfahren nach einem der Ansprüche 3 bis 7, **dadurch gekennzeichnet, dass** der wenigstens eine erste Messwert und der wenigstens eine zweite Messwert in der Messzelle (9) mit Hilfe eines im Kolben (10) integrierten Drucksensors gemessen werden.

11. Verfahren nach einem der Ansprüche 1 bis 10, **dadurch gekennzeichnet, dass** ein Messzyklus umfassend die Ermittlung des wenigstens einen ersten Messwerts und des wenigstens einen zweiten Messwerts zumindest zweimal, bevorzugt dreimal durchgeführt wird, wobei das Messvolumen jeweils unterschiedlich gewählt wird.

## Claims

1. A method for measuring the vapor pressure of liquid and solid substances, in which a sample of the substance is arranged in a variable volume of a measuring cell (9), the measuring cell (9) is gas-tightly closed, the volume of the measuring cell (9) is increased until reaching a measuring volume, and at least one first value of the gas pressure prevailing after the increase in volume is measured, **characterized in that** in addition the volume of the measuring cell (9) is reduced until reaching the measuring volume, and at least one second value of the gas pressure prevailing after the reduction of the volume is measured, and the vapor pressure (3) is calculated from the at least one first and at least one second measured values.

2. A method according to claim 1, **characterized in that** at least two first measured values and at least two second measured values are measured, that a quantity characterizing the decreasing and the increasing pressure curve (6,7), respectively, is each determined from the at least two measured values, and that the vapor pressure is calculated from the characterizing quantities.

3. A method according to claim 2, **characterized in that** the characterizing quantity is each a straight line representing the local slope of the respective pressure curve in a time/pressure coordinate system, and the vapor pressure is calculated as the point of intersection of the straight lines.

4. A method according to claim 1, 2 or 3, **characterized in that** the volume of the measuring cell (9) is further increased to a transition volume after the determination of the first measured value and prior to the determination of the second measured value.

5. A method according to claim 1, 2 or 3, **characterized in that** the volume of the measuring cell (9) is reduced to a transition volume after the determination of the first measured value and prior to the determination of the second measured value.

6. A method according to any one of claims 1 to 5, **characterized in that** the volume of the measuring cell (9) is varied with the aid of a piston (10).

7. A method according to any one of claims 1 to 6, **characterized in that** the at least one first value and the at least one second value are each determined after an identical period of time following the completion of the volume change.

8. A method according to any one of claims 1 to 7, **characterized in that** the sample in the measuring cell (9) is changed in temperature, in particular heated.

9. A method according to any one of claims 1 to 8, **characterized in that** the sample is sucked into the measuring cell (9) with the aid of the piston (10) and the sample, upon completion of the measurement, is pressed out of the measuring cell (9), preferably by the aid of the piston (10).

10. A method according to any one of claims 3 to 7, **characterized in that** the at least one first measured value and the at least one second measured value are measured in the measuring cell (9) with the aid of a pressure sensor integrated in the piston (10).

11. A method according to any one of claims 1 to 10, **characterized in that** a measuring cycle comprising the determination of the at least one first measured value and the at least one second measured value is performed at least twice, preferably three times, wherein the measuring volume is each chosen to be different.

## Revendications

1. Procédé de mesure de la pression de vapeur de substances liquides et solides, dans lequel un échantillon de la substance est placé dans un volume variable d'une cellule de mesure (9), la cellule de mesure (9) est fermée de manière étanche aux gaz, le volume de la cellule de mesure (9) est augmentée jusqu'à ce qu'un volume de mesure soit atteint, et au moins une première valeur de la pression de gaz régnant après l'augmentation de volume est mesurée, **caractérisé en ce que** le volume de la cellule de mesure (9) est en outre réduit jusqu'à ce que le volume de mesure soit atteinte et au moins une seconde valeur de la pression de gaz régnant après la réduction de volume est mesurée, et la pression de vapeur (3) est calculée à partir de l'au moins une première et de l'au moins une seconde valeur mesurée.

2. Procédé selon la revendication 1, **caractérisé en ce qu'**au moins deux premières valeurs mesurées et au moins deux deuxièmes valeurs mesurées sont mesurées, qu'une grandeur caractéristique du profil de pression descendant ou montant (6, 7) est déterminée à partir des au moins deux valeurs mesurées, et que la pression de vapeur (3) est calculée à partir des grandeurs caractéristiques.

3. Procédé selon la revendication 2, **caractérisé en ce que** la grandeur caractéristique est une droite dans un système de coordonnées temps-pression représentant la pente locale de la courbe de pression (6, 7) et la pression de vapeur (3) est calculée comme point de croisement (8) des droites.

4. Procédé selon la revendication 1, 2 ou 3, **caractérisé en ce qu'**après la détermination de la première valeur mesurée et avant la détermination de la deuxième valeur mesurée, le volume de la cellule de mesure (9) est encore augmenté jusqu'à un volume transitoire.

5. Procédé selon la revendication 1, 2 ou 3, **caractérisé en ce qu'**après la détermination de la première valeur mesurée et avant la détermination de la deuxième valeur mesurée, le volume de la cellule de mesure (9) est réduit jusqu'à un volume transitoire.

6. Procédé selon l'une des revendications 1 à 5, **caractérisé en ce que** le volume de la cellule de mesure (9) est modifié à l'aide d'un piston (10).

7. Procédé selon l'une des revendications 1 à 6, **caractérisé en ce que** l'au moins une première valeur et l'au moins une deuxième valeur sont chacune déterminées après la même période de temps après la fin du changement de volume.

8. Procédé selon l'une des revendications 1 à 7, **caractérisé en ce que** l'échantillon est tempéré, en particulier chauffé dans la cellule de mesure (9).

9. Procédé selon l'une des revendications 1 à 8, **caractérisé en ce que** l'échantillon est aspiré dans la cellule de mesure (9) à l'aide du piston (10) et qu'une fois la mesure terminée, l'échantillon est poussé hors de la cellule de mesure (9), de préférence à l'aide du piston (10).

10. Procédé selon l'une des revendications 3 à 7, **caractérisé en ce que** l'au moins une première valeur mesurée et l'au moins une deuxième valeur mesurée sont mesurées dans la cellule de mesure (9) à l'aide d'un capteur de pression intégré dans le piston (10).

11. Procédé selon l'une des revendications 1 à 10, **caractérisé en ce qu'**un cycle de mesure comprenant la détermination de l'au moins une première valeur mesurée et de l'au moins une deuxième valeur mesurée est effectuée au moins deux fois, de préférence trois fois, avec le volume de mesure étant sélectionné différemment chaque fois.
